# EUROPÄISCHE PATENTSCHRIFT

(11) **EP 1 091 511 B1**
(45) Veröffentlichungstag und Bekanntmachung des Hinweises auf die Patenterteilung: **22.06.2011**
(21) Anmeldenummer: 00117421.8
(22) Anmeldetag: 11.08.2000
(51) Int. Cl.: H04H 20/28

(54) **Verfahren zum Empfang von über ein Rundfunksystem übertragenen digitalen Daten**
Method for the reception of digital data transmitted by a broadcast system
Procédé de réception de données numériques transmises par un système de télédiffusion

(30) Priorität: 06.10.1999 DE 19948832
(43) Veröffentlichungstag der Anmeldung: 11.04.2001
(73) Patentinhaber: Deutsche Telekom AG, 53113 Bonn (DE)
(72) Erfinder: Althoff, Jürgen, 48429 Rheine (DE); Boehnke, Norbert, 81825 München (DE)
(74) Vertreter: Braun-Dullaeus, Karl-Ulrich

(56) Entgegenhaltungen:
- WO-A-97/28620
- DE-C1- 4 422 015

## Beschreibung

Die Erfindung betrifft ein Verfahren nach dem Oberbegriff des Anspruchs 1.

Üblicherweise werden bei unidirektionalen Funksystemen zur Datendistribution die Übertragungsarten "Filetransfer" und "Streammode" unterschieden. Beim "Filetransfer" werden einzelne Datensequenzen unterschiedlicher Länge, beispielsweise nach dem MP3-Verfahren codierte Musikstücke oder einzelne Dateien, asynchron übertragen, so daß in jeder Sequenz ein logisches Endsymbol übertragen werden muss, um im Empfänger und das Ende einer Sequenz erfassen zu können. Beim Streammode findet eine ununterbrochene Datenübertragung statt, so daß es ausreicht, in jeder Sequenz Symbole zur Synchronisation vorzusehen, da die Sequenzen nicht voneinander unterschieden werden müssen. Diese beiden Übertragungsarten werden alternativ angewendet, d.h. bereits die Übertragung erfolgt entweder im Filetransfer oder im Streammode. Entsprechend kann der Empfänger im Filetransfer übertragene Daten nur zur Speicherung als Dateien und im Streammode übertragene Daten nur für die Echtzeitverarbeitung bereitstellen.

Die DE 44 22 015 C1 offenbart ein Verfahren zum Übertragen und zur Wiedergabe im stream gesendeter Daten und diesen Daten zugeordneter mit Unterbrechung gesendeter digitaler Zusatzdaten. Die WO 97/28620 A1 betrifft ein Verfahren zur Datenübertragung in einem digitalen Rundfunksystem, insbesondere für DAB (Digital Audio Broadcasting). Es ist offenbart, dass "stream-type data" unmittelbar nach dem Empfang für den Benutzer etwa als Sound reproduziert werden und ferner bei Multimedia-Anwendungen auch auf einem Speichermedium für die spätere Nutzung gespeichert werden können.

Es ist daher die Aufgabe der vorliegenden Erfindung, die beschriebene Trennung aufzuheben und ein Verfahren zum Empfang von digitalen Daten vorzusehen, das unter Verwendung eines einheitlichen Übertragungsverfahrens die übertragenen Daten sowohl für eine Echt-zeitverarbeitung als auch für eine Verarbeitung einzelner Sequenzen bereitstellen kann.

Diese Aufgabe wird erfindungsgemäß gelöst durch die im Anspruch 1 enthaltenen Merkmale. Vorteilhafte Weiterbildungen des erfindungsgemäßen Verfahrens ergeben sich aus den Unteransprüchen.

Dadurch, daß bei einem Verfahren zum Empfang von zusätzlich zu den Signalen eines Rundfunkprogramms über ein Rundfunksystem unterbrechungsfrei übertragenen digitalen Daten, welche nach dem Empfang nach benutzerdefinierten Vorgaben in unterschiedlicher Weise verarbeitet werden können, wobei die Datensequenzen unterschiedlicher Länge enthalten und jeder Anfang einer Sequenz durch logische Anfangssymbole markiert ist, die empfangenen Daten sowohl für eine Echtzeitverarbeitung als auch für eine Speicherung der einzelnen Sequenzen mit nachfolgendem beliebigem Abruf der gespeicherten Sequenzen für die jeweilige Verarbeitung bereitgestellt werden, wird auch die Übertragung von getrennten Datensequenzen im Streammode ermöglicht, ohne daß deren Verarbeitung auf der Empfängerseite auf der Basis einzelner Sequenzen beeinträchtigt ist.

Es ist möglich, die Bereitstellung von Daten für den Echtzeitbetrieb und die Speicherung von Datensequenzen wahlweise alternativ oder auch für dieselben Daten durchzuführen. Im letztgenannten Fall kann beispielsweise ein Musikstück in Echtzeit wiedergegeben und zusätzlich für eine spätere wiederholte Wiedergabe gespeichert werden.

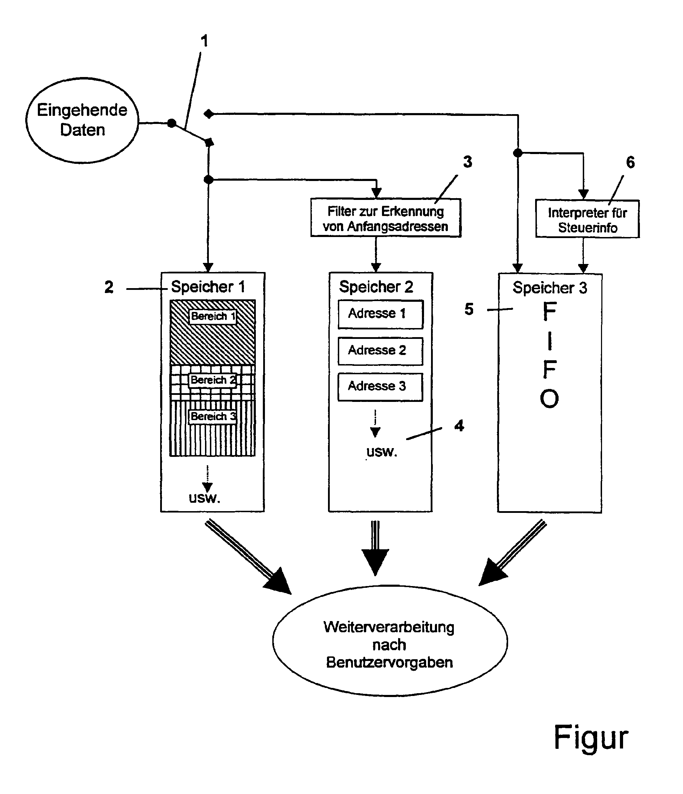

Die Erfindung wird im Folgenden anhand eines in der Figur illustrierten Ausführungsbeispiels näher erläutert. Diese zeigt in schematischer Darstellung die Ausbildung eines Empfängers für die im Streammode übertragenen Daten.

Die übertragenen digitalen Daten werden nach ihrer Trennung von dem ausgesandten Rundfunksignal, beispielsweise einem analogen Fernsehsignal, einem Umschalter 1 zugeführt. Die digitalen Daten werden vorzugsweise innerhalb der vertikalen Austastlücke des Fernsehsignals übertragen; dies ist jedoch nicht zwingend. Die Daten wurden kontinuierlich übertragen, d.h. als ununterbrochene Datenkette oder mit vorgegebenen zeitlichen Abständen, wie beispielsweise dem Abstand zwischen zwei Aussendungen in der vertikalen Austastlücke. Wenn Daten in Form von einzelnen Segmenten oder Sequenzen übertragen werden, die empfangsseitig getrennt verarbeitet werden sollen, wie einzelnen Dateien oder Musikstücken, dann findet bei der Übertragung keine zeitliche Trennung zwischen diesen statt. Hierdurch ist es möglich, die Sequenzen nur durch Anfangssymbole zu kennzeichnen; die Länge oder das Ende einer Sequenz ergibt sich dann aus dem zeitlichen Abstand des Anfangssymbols dieser Sequenz zu dem Anfangssymbol der nachfolgenden Sequenz.

Je nach Stellung des Umschalters 1 gelangen die digitalen Daten entweder direkt zu einem Speicher 2 für Datensequenzen sowie über ein Erkennungsfilter 3 für Anfangssymbole zu einem Adressenspeicher 4 oder direkt zu einem FIFO-Speicher 5.

In der gezeigten Stellung des Umschalters 1 werden die digitalen Daten dem Speicher 2 und über das Erkennungsfilter 3 dem Adressenspeicher 4 zugeführt. Die Daten werden im Speicher 2 in der Reihenfolge ihres Eintreffens gespeichert. Gleichzeitig werden die Daten im Erkennungsfilter 3 auf das Vorliegen von Anfangssymbolen untersucht. Stellt das Erkennungsfilter 3 das Vorhandensein eines Anfangssymbols in den empfangenen Daten fest, dann ordnet es diesem eine Adresse zu, welche die Anfangsadresse der diesem Anfangssymbol zugehörigen Sequenz im Speicher 2 darstellt, und schreibt diese Adresse in den Adressenspeicher 4 ein. Die jeweilige Adresse wird ermittelt aus der Adresse, die dem Anfangssymbol der vorhergehenden Sequenz zugeordnet ist, und aus dem zeitlichen Abstand zwischen dem Empfang des Anfangssymbols der vorhergehenden Sequenz und dem Empfang des der zu ermittelnden Adresse zugeordneten Anfangssymbols. Es werden somit im Speicher 2 die einzelnen Datensequenzen selbst, die in der Figur als "Bereich 1, Bereich 2, Bereich 3, usw." gekennzeichnet sind, und im Adressenspeicher 4 deren jeweilige Anfangsadresse im Speicher 2, die in der Figur als "Adresse 1, Adresse 2, Adresse 3, usw." gekennzeichnet sind, gespeichert. Da aus der Anfangsadresse einer Sequenz zugleich die Endadresse der vorhergehenden Sequenz ermittelt werden kann, können somit mit Hilfe dieser Adressen die gespeicherten Sequenzen einzeln abgerufen und nach den Vorgaben des Benutzers in gewünschter Weise verarbeitet oder auch ebenfalls nach den Vorgaben des Benutzers, nach Ablauf einer bestimmten Zeit nach dem Einschreiben in den Speicher 2 oder bei drohendem Überlauf des Speichers 2 einzeln gelöscht werden. Wenn eine Sequenz aus dem Speicher 2 für eine Weiterverarbeitung abgerufen wurde, wird diese normalerweise automatisch im Speicher 2 gelöscht. Wenn eine Sequenz im Speicher 2 gelöscht wird, wird auch ihre Anfangsadresse im Adressenspeicher 4 gelöscht.

Wenn die empfangenen digitalen Daten in Echtzeit verarbeitet werden sollen, wird der Umschalter 1 umgelegt, so daß die Daten dem FIFO-Speicher 5 zugeführt werden. Gleichzeitig gelangen die Daten zu einer Steuervorrichtung 6, welche mit den Daten übertragene Steuerinformationen auswertet und den Betrieb des FI-FO-Speichers 5, insbesondere das Auslesen der Daten aus diesem, entsprechend steuert. Nicht aus dem FIFO-Speicher 5 abgerufene Daten werden gelöscht, wenn diese an seinem Ausgang auftreten und neu empfangene Daten zu seinem Eingang geführt und in ihm gespeichert werden. Die über den FIFO-Speicher 5 in Echtzeit ausgegebenen Daten können aktuelle Informationen über die Uhrzeit, das Wetter, die Verkehrslage usw. sein, die dem Benutzer über eine entsprechende visuelle Anzeige kundgetan werden. Sie können jedoch auch Informationen über die empfangenen und im Speicher 2 gespeicherten Datensequenzen, beispielsweise Musikstücke, enthalten, so daß der Benutzer über den Inhalt des Speichers 2 informiert wird und den Abruf der Datensequenzen aus diesem in gewünschter Weise steuern kann, z.B. wenn er nur bestimmte aus den gespeicherten Musikstücken wiedergeben möchte.

Der Empfänger kann auch so ausgebildet sein, daß bestimmte der empfangenen Datensequenzen sowohl zu dem Speicher 2 als auch zu dem FIFO-Speicher 5 geführt werden. Dies können z.B. Musikstücke sein, die dann über den FIFO-Speicher 5 in Echtzeit wiedergegeben und gleichzeitig im Speicher 2 aufgezeichnet werden, um dem Benutzer für eine wiederholte Wiedergabe zur Verfügung zu stehen. Vorzugsweise Musikstücke werden mit Hilfe der MP3-Codierung in der vertikalen Austastlücke von analogen Fernsehsignalen übertragen, da diese Codierung eine ausreichende Datenkomprimierung erzielt, um ein kontinuierliches Audiosignal bei der Übertragung nur in der Austastlücke zu erreichen.

## Patentansprüche

1. Verfahren zum Empfang von zusätzlich zu den Signalen eines Rundfunkprogramms über ein Rundfunksystem unterbrechungsfrei (Stream-Mode) übertragenen digitalen Daten, welche nach dem Empfang nach vom Benutzer definierten Vorgaben in unterschiedlicher Weise verarbeitet werden können, wobei die Daten Sequenzen unterschiedlicher Länge enthalten und jeder Anfang einer Sequenz durch logische Anfangssymbole markiert sind,
**dadurch gekennzeichnet,**
**dass** die empfangenen Daten sowohl für eine Echtzeitverarbeitung als auch für eine Speicherung der einzelnen Sequenzen mit nachfolgendem beliebigem Abruf der gespeicherten Sequenzen für die jeweilige Verarbeitung bereitgestellt werden, wobei die Grösse des Speicherbereichs für eine Sequenz aus dem zeitlichen Abstand des Anfangssymbols dieser Sequenz zu dem Anfangssymbol der nachfolgenden Sequenz ermittelt wird.

2. Verfahren nach Anspruch 1, **dadurch gekennzeichnet, daß** die Bereitstellung von Daten für den Echtzeitbetrieb und die Speicherung von Datensequenzen wahlweise alternativ durchgeführt werden.

3. Verfahren nach Anspruch 1, **dadurch gekennzeichnet, daß** die Bereitstellung von Daten für den Echtzeitbetrieb und die Speicherung von Datensequenzen für dieselben Daten durchgeführt werden.

4. Verfahren nach einem der Ansprüche 1 bis 3, **dadurch gekennzeichnet, daß** jeder zu speichernden Sequenz eine Anfangsadresse im Speicher zugewiesen wird, die aus der Anfangsadresse einer vorher gespeicherten Sequenz und dem zeitlichen Abstand der diesen Sequenzen zugeordneten Anfangssymbole bestimmt wird.

5. Verfahren nach Anspruch 4, **dadurch gekennzeichnet, daß** die Anfangsadresse gespeichert und für den nachfolgenden Abruf der gespeicherten Sequenz verwendet wird.

6. Verfahren nach Anspruch 5, **dadurch gekennzeichnet, daß** eine gespeicherte Sequenz und ihre Anfangsadresse nach erfolgtem Abruf gelöscht werden.

7. Verfahren nach Anspruch 5, **dadurch gekennzeichnet, daß** eine gespeicherte Sequenz und ihre Anfangsadresse ohne Abruf gelöscht werden, wenn nach ihrer Speicherung eine vorgegebene Zeit verstrichen ist oder eine vorgegebene maximale Datenmenge nachfolgender Sequenzen gespeichert wurde.

8. Verfahren nach einem der Ansprüche 1 bis 7, **dadurch gekennzeichnet, daß** die für eine Echtzeitverarbeitung bereitgestellten Daten vor der Verarbeitung einen FIFO-Speicher durchlaufen.

9. Verfahren nach Anspruch 8, **dadurch gekennzeichnet, daß** der Betrieb des FIFO-Speichers durch in den übertragenen Daten enthaltene Steuerinformationen gesteuert wird.

10. Verfahren nach einem der Ansprüche 1 bis 9, **dadurch gekennzeichnet, daß** die Daten über ein System zur Rundfunkzusatzdaten-Übertragung übertragen werden.

11. Verfahren nach Anspruch 10, **dadurch gekennzeichnet, daß** die Daten in der vertikalen Austastfläche eines Fernsehsignals übertragen werden.

12. Verfahren nach einem der Ansprüche 1 bis 10, **dadurch gekennzeichnet, daß** die digitalen Daten in Echtzeit übertragene Musikstücke enthalten.

## Claims

1. A method for receiving digital data transmitted uninterruptedly (stream mode) in addition to the signals of a radio program via a radio system which data can be processed in various ways following the receipt of presets defined by the user, wherein the data contain sequences of various lengths and each start of a sequence is marked by logical start symbols,
**characterised in that**
the data received are provided for both real time processing and for storing the individual sequences with subsequent random retrieval of the stored sequences for the respective processing, wherein the size of the storage area for a sequence is ascertained from the distance, in terms of time, between the start symbol of this sequence and the start symbol of the subsequent sequence.

2. Method according to claim 1, **characterised in that** the provision of data for real time operation and the storing of data sequences are carried out optionally alternatively.

3. Method according to claim 1, **characterised in that** the provision of data for real time operation and the storing of data sequences are carried out for the same data.

4. Method according to one of claims 1 to 3, **characterised in that** a start address is allocated to each sequence to be stored in the memory, which address is determined from a start address of a previously stored sequence and the distance, in terms of time, between the start symbols allocated to these sequences.

5. Method according to claim 4, **characterised in that** the start address is stored and used for the subsequent retrieval of the stored sequence.

6. Method according to claim 5, **characterised in that** the stored sequence and its start address are deleted upon completed retrieval.

7. Method according to claim 5, **characterised in that** a stored sequence and its start address are deleted without retrieval, if following its storage a preset time has expired or a preset maximum amount of data of subsequent sequences was stored.

8. Method according to one of claims 1 to 7, **characterised in that** the data provided for real time processing pass through a FIFO memory prior to processing.

9. Method according to claim 8, **characterised in that** the operation of the FIFO memory is controlled by control data contained in the transmitted data.

10. Method according to claim 9, **characterised in that** the data are transmitted via a system for radio additional data transmission.

11. Method according to claim 10, **characterised in that** the data are transmitted in the vertical blank area of a television signal.

12. Method according to claim 10, **characterised in that** the digital data contain musical pieces transmitted in real time.

## Revendications

1. Procédé pour recevoir des données numériques transmises sans interruption (Stream-Mode) en supplément des signaux d'un programme radio par l'intermédiaire d'un système radio, lesquelles données peuvent être traitées de façon différente après la réception selon des spécifications définies par l'utilisateur, les données contenant des séquences de longueur différente et chaque début d'une séquence étant marqué par des symboles initiaux logiques,
**caractérisé en ce que**
les données reçues sont mises à disposition aussi bien pour un traitement en temps réel que pour un stockage des séquences individuelles avec l'appel quelconque consécutif des séquences mémorisées pour le traitement respectif, la taille de la zone de stockage pour une séquence étant déterminée à partir de l'intervalle de temps entre le symbole initial de cette séquence et le symbole initial de la séquence suivante.

2. Procédé selon la revendication 1, **caractérisé en ce que** la mise à disposition de données pour l'exploitation en temps réel et le stockage de séquences de données sont mises en oeuvre en option de façon alternative.

3. Procédé selon la revendication 1, **caractérisé en ce que** la mise à disposition de données pour l'exploitation en temps réel et le stockage de séquence de données sont mises en oeuvre pour les mêmes données.

4. Procédé selon l'une quelconque des revendications 1 à 3, **caractérisé en ce qu'**à chaque séquence à mémoriser est attribuée une adresse initiale dans la mémoire qui est déterminée à partir de l'adresse initiale d'une séquence mémorisée auparavant et de l'intervalle de temps entre les symboles initiaux attribués à ces séquences.

5. Procédé selon la revendication 4, **caractérisé en ce que** l'adresse initiale est mémorisée et est utilisée pour l'appel consécutif de la séquence mémorisée.

6. Procédé selon la revendication 5, **caractérisé en ce qu'**une séquence mémorisée et son adresse initiale sont effacées une fois l'appel effectué.

7. Procédé selon la revendication 5, **caractérisé en ce qu'**une séquence mémorisée et son adresse initiale sont effacées sans appel lorsqu'un laps de temps prédéfini s'est écoulé après son stockage ou lorsqu'une quantité de données maximale prédéfinie de séquences consécutives a été mémorisée.

8. Procédé selon l'une quelconque des revendications 1 à 7, **caractérisé en ce que** les données mises à disposition pour un traitement en temps réel traversent une mémoire FIFO avant le traitement.

9. Procédé selon la revendication 8, **caractérisé en ce que** l'exploitation de la mémoire FIFO est commandée par des informations de commande incluses dans les données transmises.

10. Procédé selon l'une quelconque des revendications 1 à 9, **caractérisé en ce que** les données sont transmises au moyen d'un système pour la transmission de données supplémentaires de radio.

11. Procédé selon la revendication 10, **caractérisé en ce que** les données sont transmises dans la surface de balayage vertical d'un signal de télévision.

12. Procédé selon l'une quelconque des revendications 1 à 10, **caractérisé en ce que** les données numériques contiennent des morceaux de musique transmis en temps réel.
